# EUROPEAN PATENT SPECIFICATION

(11) **EP 2 098 735 B1**
(45) Date of publication and mention of the grant of the patent: **20.07.2016**
(21) Application number: 09154136.7
(22) Date of filing: 02.03.2009
(51) Int. Cl.: F16B 13/02, F16B 13/12

(54) **Expansible rawplug for walls and the like**
Erweiterbarer Dübel für Wände und dergleichen
Rawplug extensible pour murs et similaires

(30) Priority: 05.03.2008 ES 200800462 U
(43) Date of publication of application: 09.09.2009
(73) Proprietor: Apolo Fijaciones y Herramientas, S.L., 08211 Castellar del Valles (ES)
(72) Inventor: Ceravalls Pujol, Ramón, 08211 Castellar del Valles (ES); Lopez Puche, Núria, 08211 Castellar del Valles (ES)
(74) Representative: Oficina Ponti, SLP

(56) References cited:
- WO-A1-01/75314
- DE-B- 1 234 452
- DE-U1- 8 321 395

## Description

The present invention relates to an expansible rawplug for walls and the like, improving their anchoring conditions, both in walls made of solid materials and walls made of hollow materials.

### BACKGROUND OF THE INVENTION

Known in the art are expansible rawplugs for walls and the like used for fixing a bolt or similar fastener.

Said expansible rawplugs include some toothed expansion arms that extend in a longitudinal direction and can be expanded when an expansion bolt or the like is inserted into them.

In solid walls the expansible rawplug is fixed by means of friction between the wall and the teeth of the rawplug.

In walls made of hollow material the expansion arms of the rawplug deform, in a deformation caused by the expansion of rawplug due to insertion of the bolt into an interior whose diameter is smaller than its own, creating a knot inside the material and thereby preventing the whole formed by the bolt-rawplug coming detached.

With the rawplugs of this type that currently exist in the market it is not possible to achieve good anchorage in solid walls at the deeper part of the hole, since in walls made of hollow material formation of the knot is very difficult to achieve due to the large distance between the teeth of the rawplug, or in other words the low number of teeth. These disadvantages can lead to coming apart of the whole formed by the bolt-rawplug, with the attendant instability and risk for the user.

In solid materials, more specifically, achieving a strong anchorage calls for the bolt to be driven in with great force. If that force is to be reduced, then anchorage capacity in solid materials is lost.

Expansible rawplug HUD-1 from Hilti available from internet and catalogues has a plastic toothed sleeve with particular curved grooves. The curved grooves help on deforming the sleeve when forming the knot. Nevertheless, this rawplug has an end devoid of teeth longer than the diameter which reduces the anchorage capacity in solid materials.

Expansible rawlplug SX from Fischer also available from internet and catalogues has two arms without teeth which make insufficient the anchorage capacity inside a drilling hole.

### DESCRIPTION OF THE INVENTION

The expansible rawplug object of the invention manages to resolve the aforesaid disadvantages, while providing other advantages that will be set out in the description that follows.

The expansible rawplug for walls and the like object of the invention is characterised in that the ratio between the diameter of the rawplug and the distance between two adjoining teeth is between 3 and 4, and in that the end inside the wall in the longitudinal direction of the rawplug devoid of teeth is equal to or less than the diameter, and wherein two of the arms present teeth all along their length, except for the head and the end, and the other two arms are toothed only on the half closest to the end.

Inside/interior end must be taken to mean the end that is left inside the wall when the rawplug is inserted into it.

Owing to these characteristics, the contact surface of the rawplug with the wall is greater than with the known rawplugs, thereby increasing the resistance to coming away.

As the teeth occupy almost the entire surface area of the rawplug, particularly on the half furthest inside the drilled hole, a more efficient anchorage is achieved.

In hollow materials the problem lies in forming a knot. If the rawplug is very thick it can break while the knot is being formed, or, if it does not, considerable force is required to create it.

The expansible rawplug of the invention also makes knot formation easier to achieve in walls made of hollow materials, since the ratio between the diameter of the rawplug and the pitch of a tooth means that the rawplug has a larger number of teeth and therefore greater capacity for deforming and/or forming a knot.

The ratio between the diameter of the rawplug and the distance between two adjacent teeth is between 3 and 4.

### BRIEF DESCRIPTION OF THE DRAWINGS

For a better understanding of the matters set out some drawings are attached which, schematically and solely by way of non-restrictive example, show a practical case of embodiment.

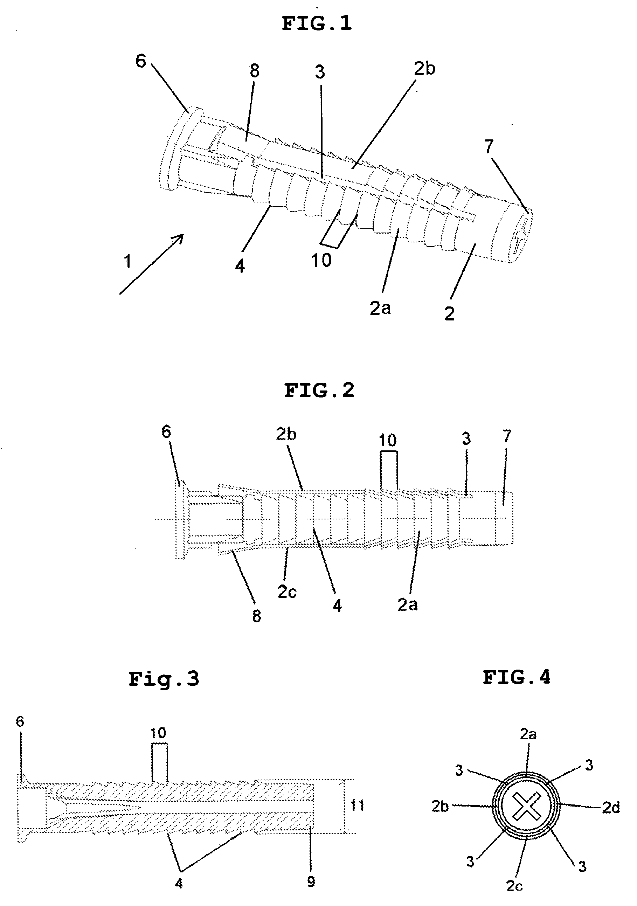

In said drawings, Figure 1 is a perspective view of the expansion rawplug of the invention; Figure 2 is a side elevation view of the same rawplug shown in Figure 1; Figure 3 is a longitudinal section of the same expansible rawplug; and Figure 4 is a cross section.

### DESCRIPTION OF A PREFERRED EMBODIMENT

As the figures show, the expansible rawplug 1 includes four expansion arms 2a, 2b, 2c and 2d of identical geometry separated by windows 3. It can also be seen that two of the arms (2a, 2c) present teeth 4 all along their length, except of course for the head 6 and the end 7, while the other two expansion arms 2b, 2d are toothed only on their half that is further from the head 6 of the rawplug 1, or in other words on the half closest to the end 7 of the rawplug 1. It can also be observed that the expansion arms 2b, 2d are provided, on their ends closest to the head 6, with a tooth 8 that is larger in size than the rest of the teeth 4 and that serves to facilitate anchorage of the rawplug in the mouth of the hole that is usually of larger diameter. This characteristic already known in the art is essential in hollow materials for preventing the rawplug rotating randomly when the bolt is driven home.

Figure 3 shows the thickness 9 of the expansible rawplug 1, as well as the pitch 10 between two adjacent teeth 4. It can also be observed that the diameter 11 of the rawplug 1 is greater than the pitch 10 between one tooth and another of the teething, of the order of some four times greater.

The expansion arms of the expansible rawlplug 2a, 2b, 2c and 2d have an identical symmetry to each other, such that the capacity of said expansion arms to deform increases owing to a more uniform spread of the friction on said four expansion arms 2a, 2b, 2c and 2d. Said increase of deformation capacity facilitates formation of the knot inside the hole drilled in hollow materials.

## Claims

1. Expansible rawplug for walls and the like, which includes toothed expansion arms (2a, 2b, 2c and 2d) that extend in a longitudinal direction and that can be expanded when an expansion bolt or the like is inserted into it, **characterised in that** the ratio between the diameter (11) of the rawplug (1) and the distance between two adjoining teeth (4) is between 3 and 4, and **in that** the end (7) inside the wall in the longitudinal direction of the rawplug devoid of teeth is equal to or less than the diameter (11), and wherein two of the arms (2a,2c) present teeth (4) all along their length, except for the head (6) and the end (7), and the other two (2b,2d) arms are toothed only on the half closest to the end.

## Patentansprüche

1. Erweiterbarer Dübel für Wände und dergleichen, welcher gezahnte Expansionsarme (2a, 2b, 2c und 2d) aufweist, welche sich in einer Längsrichtung erstrecken, und welche erweitert werden können, wenn eine Erweiterungsschraube oder dergleichen darin eingesetzt wird, **dadurch gekennzeichnet, dass** das Verhältnis zwischen dem Durchmesser (11) des Dübels (1) und der Distanz zwischen zwei angrenzenden Zähnen (4) zwischen 3 und 4 liegt, und dadurch, dass das Ende (7) in der Wand in der Längsrichtung des Dübels, welches frei von Zähnen ist, gleich oder geringer als der Durchmesser (11) ist, und wobei zwei der Arme (2a, 2c) Zähne (4) auf ihrer gesamten Länge aufweisen, außer für den Kopf (6) und das Ende (7), und wobei die anderen zwei Arme (2b, 2d) nur auf der dem Ende nächstliegenden Hälfte gezahnt sind.

## Revendications

1. Cheville extensible pour murs et éléments similaires, comprenant des bras d'extension dentés (2a, 2b, 2c et 2d) qui s'étirent longitudinalement et peuvent être élargis lorsqu'un boulon à expansion ou un élément semblable y est introduit, **caractérisé en ce que** le rapport entre le diamètre (11) de la cheville (1) et l'espace entre deux dents adjacentes (4) est compris entre 3 et 4 et **en ce que** l'extrémité (7) dans le mur dans le sens longitudinal de la cheville dépourvue de dents est d'une longueur égale ou inférieure au diamètre (11), et dans laquelle deux des bras (2a, 2c) présentent des dents (4) sur toute leur longueur, à l'exception de la tête (6) et de l'extrémité (7), et les deux autres (2b, 2d) bras ne sont dentés que sur leur moitié la plus proche de l'extrémité.
